(19) Europäisches Patentamt / European Patent Office / Office européen des brevets

(11) **EP 3 293 232 B1**

(12) **EUROPÄISCHE PATENTSCHRIFT**

(45) Veröffentlichungstag und Bekanntmachung des Hinweises auf die Patenterteilung:
**29.07.2020   Patentblatt 2020/31**

(51) Int Cl.:
***C09D 5/03*** *(2006.01)*

(21) Anmeldenummer: **16187822.8**

(22) Anmeldetag: **08.09.2016**

(54) **PULVERLACK UND VERFAHREN ZUR HERSTELLUNG EINES PULVERLACKS**

POWDER PAINT AND METHOD OF PREPARING A POWDER PAINT

LAQUE EN POUDRE ET SON PROCEDE DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.03.2018   Patentblatt 2018/11**

(73) Patentinhaber: **IGP Pulvertechnik AG**
**9500 Wil (CH)**

(72) Erfinder:
• **Grill, Carmen**
  **8461 Oerlingen (CH)**
• **Lewis, Vanessa**
  **9552 Bronschhofen (CH)**

(74) Vertreter: **Hepp Wenger Ryffel AG**
**Friedtalweg 5**
**9500 Wil (CH)**

(56) Entgegenhaltungen:
WO-A1-91/18951          WO-A1-98/36011
WO-A1-2010/066605       DE-A1-102013 113 885
US-A1- 2013 131 209     US-A1- 2015 064 444

• DATABASE WPI Week 201366 Thomson Scientific, London, GB; AN 2013-Q43798 XP002764433, -& CN 103 086 744 B (CHINA BUILDING MATERIALS INSPECTION AUTH) 10. Dezember 2014 (2014-12-10)

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Pulverlack, ein Verfahren zur Herstellung eines Pulverlacks, ein Substrat mit einer Pulverlackbeschichtung sowie ein Verfahren zur Pulverlackbeschichtung gemäss dem Oberbegriff der unabhängigen Ansprüche.

Strukturierte Oberflächen aus Pulverlackbeschichtungen sind beispielsweise auf Metallgehäusen bekannt. Strukturierte Oberflächen werden durch zugesetzte Strukturmittel eingebracht. Die Herstellung von speziellen optischen Effekten auf Substraten gestaltet sich jedoch schwierig. Die strukturierten Oberflächen des Stands der Technik sind oftmals nicht ästhetisch ansprechend bzw. aufwendig in der Herstellung.

WO-A-91 18951, WO-A-98 36011 und CN-A-103086744 offenbaren Pulverlacke, aber kein $X_{90}$-Wert.

Es ist daher Aufgabe der Erfindung die Nachteile des Stands der Technik zu überwinden. Es sind insbesondere Aufgaben der Erfindung einen Pulverlack bereitzustellen, welcher ästhetisch ansprechenden Pulverlackbeschichtungen und spezielle reproduzierbare optische Effekte auf Substraten ausbildet, ein Verfahren zur Herstellung von derartigen Pulverlacken bereitzustellen, und Pulverlack-beschichtete Substrate mit definierten Strukturierungen, beispielsweise mit optischen Effekten sowie ein Verfahren zur Pulverlackbeschichtung, bereitzustellen. Diese Aufgaben werden durch die Merkmale der unabhängigen Ansprüche gelöst.

Die Erfindung betrifft einen Pulverlack aufweisend Partikel mit einer Partikelgrössenverteilung mit einem $X_{50}$-Wert im Bereich von 35 bis 175 $\mu$m, bevorzugt 50 bis 175 $\mu$m, besonders bevorzugt im Bereich von 60 bis 160 $\mu$m. Ganz besonders bevorzugt ist der $X_{50}$-Wert im Bereich von 75 bis 150 $\mu$m. Das Verhältnis der Differenz des $X_{90}$-Werts und des $X_{10}$-Werts zum $X_{50}$-Wert gemäss der Formel $(X_{90}-X_{10})/(X_{50})$ liegt im Bereich von 0.5 bis 2.25, bevorzugt im Bereich von 0.75 bis 2.0. Hierbei weist der Pulverlack ein Strukturmittel, insbesondere Celluloseacetobutyrat (CAB) und/oder ein auf Polytetrafluorethylen (PTFE) basierendes Additiv auf. Auf Polytetrafluorethylen (PTFE) basierende Additive sind beispielsweise PTFE-Wachse. Derart wird ein Pulverlack bereitgestellt, der beim Beschichten eines Substrats eine ästhetisch ansprechende strukturierte Oberfläche erzielt.

Die Bezeichnungen $X_{10}$, $X_{50}$ und $X_{90}$ sind äquivalent zu den Bezeichnungen $D_{10}$, $D_{50}$ und $D_{90}$. Der X10-Wert entspricht bei einer Partikelgrössenverteilung eines Pulverlacks dem Wert, bei welchem 90% der Partikel eine Partikelgrösser > $X_{10}$ aufweisen (bzw. 10% der Partikel weisen eine Partikelgrösse < $X_{10}$ auf). Der $X_{50}$-Wert entspricht bei einer Partikelgrössenverteilung eines Pulverlacks dem Wert, bei welchem 50% der Partikel eine Partikelgrösser > $X_{50}$ aufweisen (bzw. 50% der Partikel weisen eine Partikelgrösse < $X_{50}$ auf. Der $X_{90}$-Wert entspricht bei einer Partikelgrössenverteilung eines Pulverlacks dem Wert, bei welchem 10% der Partikel eine Partikelgrösse > $X_{90}$ aufweisen (bzw. 90% der Partikel weisen eine Partikelgrösse < $X_{90}$ auf).

Der erfindungsgemässe Pulverlack umfasst bevorzugt ein reaktives System, besonders bevorzugt ein zu einem Duroplasten aushärtendes reaktives System.

Die Partikelgrössenverteilung des erfindungsgemässen Pulverlacks wird ermittelt wie nachstehend beschrieben.

Unter einem Strukturmittel (oder Strukturhilfsmittel) wird gemeinhin ein Mittel verstanden, welches die Bildung einer Struktur bzw. Strukturierung unterstützt. Definitionsgemäss werden zu einem Lackmaterial Strukturmittel zugesetzt wie bspw. Thixotropier- oder Verdickungsmittel. Mit diesen Zusatzmitteln allein gelingt es jedoch meist noch nicht, die gewünschten Struktur-Effekte zu erzielen. Notwendig dazu sind eine gegenseitige Abstimmung von Strukturmittel, Bindemittel, Füllstoff sowie eine geeignete Auftragstechnik. (vgl. Römp Lexikon, Lacke und Druckfarben, 10. Auflage 1998)

Das Strukturmittel kann in einer Menge im Bereich von 0.1 bis 1.5 Gew.-%, bevorzugt 0.15 bis 1.3 Gew.-%, besonders bevorzugt 0.2 bis 1.0 Gew.-%, bezogen auf das Gesamtgewicht des Pulverlacks vorliegen.

Der Pulverlack kann Partikel mit einer Partikelgrössenverteilung aufweisen, wobei $X_{10}$ ausgewählt ist aus dem Bereich 20 bis 35 $\mu$m, wobei $X_{50}$ ausgewählt ist aus dem Bereich 100 bis 150 $\mu$m, und wobei $X_{90}$ ausgewählt ist aus dem Bereich 165 bis 175 $\mu$m. Das Verhältnis der Differenz von $X_{90}$ und $X_{10}$ zu $X_{50}$-Wert ist hierbei im Bereich von 0.75 bis 1.5, bevorzugt 0.9 bis 1.35.

Der Pulverlack kann Partikel mit einer Partikelgrössenverteilung aufweisen, wobei $X_{10}$ ausgewählt ist aus dem Bereich 14 bis 16 $\mu$m, wobei $X_{50}$ ausgewählt ist aus dem Bereich 77 bis 80 $\mu$m, und wobei $X_{90}$ ausgewählt ist aus dem Bereich 157 bis 159 $\mu$m. Das Verhältnis der Differenz von $X_{90}$ und $X_{10}$ zu $X_{50}$-Wert ist hierbei im Bereich von 1.75 bis 1.95, bevorzugt 1.8 bis 1.9.

Der Pulverlack kann mindestens ein Effektpigment aufweisen. Unter Effektpigmenten werden Pigmente verstanden, die einen besonderen, insbesondere ästhetisch ansprechenden, Effekt in einer Pulverlackbeschichtung erzielen. Auf diese Weise kann der optische Effekt zusätzlich eingestellt werden.

Effektpigment ist ein gebräuchlicher Begriff für Pigmente, die in Lacken einen optischen Effekt erzeugen, der vorwiegend auf Lichtreflexion beruht (vgl. Römp Lexikon, Lacke und Druckfarben, 10. Auflage 1998). Die bedeutendste Gruppe der Effektpigmente stellen die Glanzpigmente dar. Nach DIN 55944: 1990-04 gehören zu diesen die Metalleffektpigmente und die Perlglimmerpigmente. Spezielle Effektpigmente sind beispielsweise plättchenförmiges Graphit, plättchenförmiges Eisenoxid und mikronisiertes Titanoxid. Mikronisiertes Titanoxid verursacht einen winkelabhängigen Effekt. Effektpigmente können ausgewählt sein aus der Gruppe Metalleffektpigmente; insbesondere Aluminiumpigmente, Goldbronzen (Kupfer, Kupfer/Zink), feuergefärbte Bronzen, Eisenoxid-Aluminium-Pigmente; Perlglimmerpigmente, insbesondere Fischsilber, basisches Bleicarbonat, Bismutoxidchlorid, Metalloxid-Glimmer-Pigmente; sonstige Effektpigmente, insbesondere mikronisiertes Titandioxid, plättchenförmiger Graphit, plättchenförmiges Eisenoxid, Mehrschicht-Effektpigmentes aus Physical vapor deposition (PVD)-Filmen, Liquid Crystal Polymer-Pigmente.

Bevorzugt ist das Effektpigment ein Aluminiumpigment und/oder ein Perlglimmerpigment. Weitere Effektpigmente können Leuchtpigmente, Edelstahlpigmente, Kupferpigmente, Glasflakes oder Glashohlkugeln sein. Ebenso bevorzugt ist das Effektpigment eine Mischung der vorgenannten Effektpigmente.

Das Effektpigment kann bevorzugt eine Mischung aus Aluminiumpigment und Perlglimmerpigment sein. Die Gesamtzusammensetzung des Pulverlacks kann maximal 5 Gew.-% des Effektpigments oder der Effektpigment-Mischung aufweisen. Dies bedeutet, dass > 0 bis 5 Gew.-% der Gesamtzusammensetzung des Pulverlacks Aluminiumpigment sind und das > 0 bis 5 Gew.-% der Gesamtzusammensetzung des Pulverlacks Perlglimmerpigment ist. Dabei kann die Summe der Gew.-% von Aluminiumpigment und Perlglimmerpigment maximal 5 sein und muss grösser 0 sein. Bevorzugt kann das oder die Effektpigmente 0.1 bis 3 Gew.-%, besonders bevorzugt 0.2 bis 2 Gew.-%, des Pulverlacks ausmachen. Spezielle Mischungsverhältnisse führen zu einzigartigen Effektausprägungen bei einer Pulverlackbeschichtung. Die Aluminiumpigmente wirken reflektierend im Sinne einer direkten Reflektion des Lichtes. Die Perlglimmerpigmente weisen Interferenzeffekte auf. Über spezielle Mischungen des Aluminiumpigments und des Perlglimmerpigments wird das Effektbild, also die Effektausprägung, eingestellt. Das Effektbild ist derart in Richtung Reflektion oder Interferenz einstellbar. Besonders ansprechende optische und ästhetische Effekt werden auf diese Weise in Pulverlackbeschichtungen erzielt.

Ist ein Aluminiumpigment als Effektpigment im Pulverlack enthalten, so weist das Aluminiumpigment bevorzugt Partikelgrössen im Bereich von 4 bis 100 $\mu$m auf.

Ist ein Perlglimmerpigment als Effektpigment im Pulverlack enthalten, so weist das Perlglimmerpigment bevorzugt eine durchschnittliche Partikelgrösse im Bereich von 10 bis 60 $\mu$m auf.

Der Pulverlack weist eine Partikelgrössenverteilung mit einem $X_{90}$-Wert im Bereich von 110 bis 195 $\mu$m, bevorzugt im Bereich von 135 bis 195 $\mu$m, besonders bevorzugt im Bereich von 145 bis 185 $\mu$m, ganz besonders bevorzugt im Bereich von 155 bis 175 $\mu$m, auf und kann einen $X_{10}$-Wert im Bereich von 5 bis 60 $\mu$m, bevorzugt im Bereich von 12 bis 60 $\mu$m, besonders bevorzugt im Bereich von 13 bis 45 $\mu$m, ganz besonders bevorzugt im Bereich von 14 bis 35 $\mu$m, aufweisen.

Die maximale Partikelgrösse des Pulverlacks ist bevorzugt $\leq$ 1 mm.

Der Pulverlack kann ein vernetzendes System sein. Vernetzende Systeme sind beispielsweise duroplastische Systeme. Dabei kann der Pulverlack bevorzugt ausgewählt sein aus der Gruppe Polyester-Pulverlacke, Epoxid-Pulverlacke, Polyester-Epoxid-Pulverlacke, Polyurethan-Pulverlacke, Acrylat-Pulverlacke, Fluorpolymer-Pulverlacke, und Polymaid-Pulverlacke.

Der Pulverlack kann zusätzlich Effektmittel aufweisen. Diese sind beispielsweise Fasern, Schnipsel, Splitter. Auf diese Weise kann die Strukturierung eines mit dem Pulverlack beschichteten Substrats heterogener ausgebildet werden.

Der Pulverlack kann grobe und feine Partikel aufweisen. Darunter wird verstanden, dass der Pulverlack eine Mischung aus einem Pulverlack mit groben Partikeln sowie einem Pulverlack mit feinen Partikeln ist. Unter groben Partikeln versteht sich eine Partikelverteilung mit $X_{10}$ im Bereich von 13 bis 40 $\mu$m, bevorzugt 17 bis 34 $\mu$m, besonders bevorzugt 20 bis 31 $\mu$m, mit $X_{50}$ im Bereich von 120 bis 175 $\mu$m, bevorzugt 128 bis 167 $\mu$m, besonders bevorzugt 135 bis 160 $\mu$m, und mit $X_{90}$ im Bereich von 135 bis 180 $\mu$m, bevorzugt 150 bis 175 $\mu$m, besonders bevorzugt im Bereich von 160 bis 175 $\mu$m. Unter feinen Partikel versteht sich eine Partikelverteilung mit $X_{10}$ im Bereich von 3 bis 20 $\mu$m, bevorzugt 4 bis 18 $\mu$m, besonders bevorzugt 6 bis 13 $\mu$m, mit $X_{50}$ im Bereich von 25 bis 56 $\mu$m, bevorzugt 27 bis 53 $\mu$m, besonders bevorzugt 32 bis 48 $\mu$m, und mit $X_{90}$ im Bereich von 62 bis 100 $\mu$m, bevorzugt 65 bis 95 $\mu$m, besonders bevorzugt 70 bis 90 $\mu$m. Der resultierende Pulverlack aus groben und feinen Partikeln, d.h. die Mischung, weist eine Partikelgrössenverteilung mit $X_{10}$ im Bereich von 5 bis 28 $\mu$m, bevorzugt 7 bis 25 $\mu$m, besonders bevorzugt 10 bis 22 $\mu$m, mit $X_{50}$ im Bereich von 35 bis 75 $\mu$m, bevorzugt 40 bis 70 $\mu$m, besonders bevorzugt 48 bis 65 $\mu$m, und $X_{90}$ im Bereich von 110 bis 170, bevorzugt 120 bis 160 $\mu$m, besonders bevorzugt 140 bis 160 $\mu$m.

Das Mischungsverhältniss aus groben Partikeln und feinen Partikeln kann 75:25, 70:30, 60:40, 50:50, 30:70 oder 10:90 sein.

Ein weiterer Aspekt der Erfindung betrifft ein Verfahren zur Herstellung eines Pulverlacks, insbesondere eines Pulverlacks wie vorgängig erläutert, umfassend die Schritte des Zerkleinerns, insbesondere Mahlens, einer Kunststoffzusammensetzung, insbesondere eines Extrudats, und des Abtrennens, insbesondere durch Sieben, von Material mit einer Partikelgrösse > 1 mm.

Ein weiterer Aspekt der Erfindung betrifft ein beschichtetes, vorzugsweise elektrisch leitendes, Substrat aufweisend mindestens eine Oberfläche mit einer Pulverlackbeschichtung, insbesondere basierend auf einem Pulverlack wie vorgängig erläutert. Hierbei weist die beschichtete Oberfläche einen Mittelrauhwert $R_a$ im Bereich von 10 bis 40 $\mu$m,

bevorzugt im Bereich von 15 bis 35 $\mu$m, besonders bevorzugt im Bereich von 20 bis 30 $\mu$m, oder eine Schiefe $R_{SK}$ von < 0, insbesondere im Bereich von -0,01 bis -0,4 auf.

Der Mittelrauhwert $R_a$ ist der arithmetische Mittelwert der Beträge aller Profilwerte des Rauheitsprofils und wird nach DIN EN ISO 4287:2010-07 bestimmt. Die Schiefe $R_{SK}$ (Skewness) ist ein Mass für die Unsymmetrie der Amplitudendichtekure. Eine negative Schiefe kennzeichnet eine Oberfläche mit gutem Tragverhalten. Die Schiefe $R_{SK}$ wird nach DIN EN ISO 4287:2010-07 bestimmt.

Weitere Parameter für die Charakterisierung der Strukturierung von Oberflächen sind u.a. die Einzelrauhtiefe $R_{zi}$ und Rauhtiefe $R_z$, die Grundrauhtiefe $R_{3z}$ und die Wellentiefe $W_t$. Die Einzelrauhtief $R_{zi}$ ist die Summe aus der Höhe der grössten Profilspitze und der Tiefe des grössten Profiltals des Rauheitsprofils innerhalb einer Einzelmessstrecke. Die Rauhtiefe $R_z$ ist der arithmetische Mittelwert der Einzelrauhtiefen $R_{zi}$ aufeinanderfolgender Einzelmessstrecken. Die Einzelrauhtiefe $R_{zi}$ und die Rauhtiefe $R_z$ werden nach DIN EN ISO 4287:2010-07 bestimmt.

Die Grundrauhtiefe $R_{3z}$ ist der Mittelwert aus Einzelrauhtiefen $R_{3zi}$ ($R_{3zi}$ ist der senkrechte Abstand der dritthöchsten Profilspitze vom dritttiefsten Profiltal des Rauheitsprofils innerhalb einer Einzelmessstrecke) fünf aufeinanderfolgender Einzelmessstrecken nach Werknorm DB N 31007 (1983). Die Wellentiefe $W_t$ entspricht der Gesamthöhe des Wellenprofils und ist die Summe aus der Höhe der grössten Profilspitze und der Tiefe des grössten Profiltals des Wellenprofils innerhalb der Messstrecke (bestimmt nach DIN EN ISO 4287:2010-07).

Ein weiterer Aspekt der Erfindung betrifft ein Verfahren zum Pulverlackbeschichten eines elektrisch leitenden Substrats, wobei mindestens eine Oberfläche des elektrisch leitenden Substrats mit einem Pulverlack wie vorgängig erläutert beschichtet wird, aufweisend die Schritte des Bereitstellens eines zu beschichtenden elektrisch leitfähigen Substrats, Fluidisierens des Pulverlacks, Auftragens des Pulverlacks auf das elektrisch leitende Substrat, insbesondere mittels Sprühauftrag, und Aushärtens des Pulverlacks bei einer Temperatur im Bereich von 150 bis 210°C, bevorzugt 160 bis 200°C, besonders bevorzugt 170 bis 190°C.

Eine Ansaugeinheit mit lokaler Fluidisierluft zum Ansaugen des für das Beschichten vorgesehene Pulverlacks weist ein niedriges Niveau der Fluidluft da, um einer Trennung von groben und feinen Partikeln entgegenzuwirken. Niedriges Niveau bedeutet, dass keine oder wenig Fluidisierluft von unten durch den Pulverlack geleitet wird. Vor dem Auftragen des Pulverlacks kann eine Primerschicht, bspw. eine Korrosionsprimer, auf das Substrat aufgetragen werden. Die Primerschicht schützt das Substrat beispielsweise vor Feuchtigkeit oder Kontakt mit dem Pulverlack bei einer Unverträglichkeit. Des Weiteren wird bevorzugt ein Stabinjektor, insbesondere ohne Fluidisierluft, zum Auftragen des Pulverlacks verwendete. Dieser weist eine geringe Vibration auf, sodass grobe und feine Partikel nicht separiert (entmischt) werden.

Die Sichtflächenleistung ist aufgrund der grossen Partikel vergleichsweise gering einzustellen und so wird ein geringer Pulverausstoss erreicht. Andernfalls treffen die Partikel mit grosser Energie auf das zu beschichtende Substrat auf und fallen aufgrund ihrer höheren Masse wieder ab. Durch die vergleichsweise geringe Einstellung fallen die grossen Partikel nicht vom zu beschichtenden Substrat ab.

Eine Rückgewinnung des Pulverlacks ist nicht sinnvoll möglich, da eine Trennung der groben und feinen Partikel während dem Auftragsvorgang erfolgt. Um die erforderliche Partikelgrössenverteilung zu erhalten, wäre ein erneutes Mischen notwendig.

Die Spannung der Beschichtungsanlage ist bevorzugt im Bereich von 60-80 kV eingestellt, womit erfahrungsgemäss optimale Beschichtungsergebnisse erzielt werden.

Eine erhöhte Sprühdistanz von $\geq$350mm kann eingestellt werden. Derart ergibt sich ein homogeneres Sprühbild.

MESSUNG DER PARTIKELGRÖSSENVERTEILUNG DES PULVERLACKS

Die Partikelgrössenverteilung des Pulverlacks wird per Laser-Diffraktion in einem HELOS-System H1746 (Sympatec) bestimmt. Der Messbereich kann über die Brennweiten (100, 200 und 500 mm) eingestellt werden. Für die Messung werden drei optische Module R3, R3, R4 verwendet und beispielsweise wie folgt eingestellt: R3 im Partikelgrössenbereich von 0.5 bis 175 $\mu$m, R4 im Partikelgrössenbereich von 0.5 bis 350 $\mu$m und R5 im Partikelgrössenbereich von 0.5 bis 875 $\mu$m.

Das System wird mit Kalibrierpulver, bspw. Sic - P600 ("Silicon Carbide reference material" von Sympatec), kalibriert.

Für die Messung werden 50 g des Pulverlacks in den Trichter des HELOS-Systems H1746 gefüllt und die Messung gestartet. Die Messung erfolgt für 10 Sekunden bei einem Luftdruck von 3 bar. Die Ergebnisse der Messung werden per Drucker oder Bildschirm ausgegeben.

BEISPIELE

Zum Auftragen des Pulverlacks auf ein elektrisch leitendes Substrat werden die folgende Vorrichtungen und Verfahrenseinstellungen verwendet. Beispiel A ist ein Pulverlack mit einer Korngrössenverteilung mit $X_{10}$ von 10.5 $\mu$m,

$X_{50}$ von 38.47 μm und $X_{90}$ von 80.96 μm enthaltend 0.5 Gew.-% eines PTFE-Wachses (bspw. Fluo PTFE-Wachs von KROMACHEM GmbH, Leverkusen, bzw. Micro Powders Inc.). Beispiel B ist ein Pulverlack mit einer Korngrössenverteilung mit $X_{10}$ von 10.45 μm, $X_{50}$ von 37.04 μm und $X_{90}$ von 77.46 μm enthaltend 0.1 Gew.-% Celluloseacetobutyrat (CAB). Beispiel C ist ein Pulverlack mit einer Korngrössenverteilung mit $X_{10}$ von 17.8 μm, $X_{50}$ von 86.6 μm und $X_{90}$ von 164 μm enthaltend 1 Gew.-% Perlglimmereffektpigment. Der Pulverlack des Beispiels C ist eine 50:50 Mischung aus den Pulverlacken der Beispiel A und B, wobei das Perlglimmereffektpigment nachträglich zugemischt wurde. In der nachfolgenden Tabelle sind Auftragsparameter für die Beispiele A, B und C angegeben.

| | A | B | C |
|---|---|---|---|
| Korona-Pistole | Ja | Ja | Ja |
| Tribo-Pistole alle Hersteller | Nein | Nein | Nein |
| Sichtflächenleistung* (m$^2$ / min) / Anzahl der Pistolen | ≤ 0.6 | ≤ 0.5 | ≤ 0.4 |
| Pulverförderung** Stabinjektor (a) | Ja | Ja | Ja |
| Pulverförderung** Ansaugeeinheit / Fluidluft (b) | Ja | Ja | Bedingt |
| Pulverförderung** Pulverbehälter / Fluidisierung (c) | Ja | Ja | Nein |
| Verarbeitung im Rückgewinnungsbetrieb | Ja | Ja | Nein |
| Einstellung Hochspannung*** (kV) | ≥ 70 | ≥ 70 | ≥ 60 |
| Einstellung Strombegrenzung (μA) | 80 | 80 | 80 |
| Einstellung Pulverausstoss**** (g/min) | 130 | 140 | 150 |
| Sprühdistanz Pistole / Objekt (mm) | 300 | 350 | ≥ 350 |
| Siebfähigkeit Maschenweite > 400 μm | Ja | Ja | Nein |

Das Auftragen eines Korrosionsprimers auf den Untergrund (Substrat) aus Stahl, welches optional verzinkt ist, ist nicht zwingend erforderlich für die Beispiele A, B und C. Das Auftragen eines Korrosionsprimers auf den Untergrund (Substrat) aus Aluminium wird nicht empfohlen für die Beispiele A, B und C.

```
* Sichtflächenleistung = (Transportgeschwindigkeit in m/min x

Beschichtungshöhe in m) / Anzahl der Pistolen
```

**Pulverförderung

(a) Stabinjektor ohne Fluidluft
(b) Ansaugeinheit mit Fluidluft
(c) Fördern über Fluidbehälter - Injektor / Venturi, Digitale Dichtstrom Fördertechnik (DDF), High Density Low Velocity (HDLV), unabhängig vom Hersteller

***Hochspannung: Die Parameter Hochspannung sind Richtwerte und müssen herstellerabhängig angepasst werden.

**** Pulverausstoss: Die Angaben sind Richtwerte und können in Abhängigkeit der Anlagenhersteller variieren.

Weitere Aspekte der Erfindung betreffen:

A. Pulverlack aufweisend Partikel mit einer Partikelgrössenverteilung mit $X_{10}$ ausgewählt aus dem Bereich 20 bis 35 μm, $X_{50}$ ausgewählt aus dem Bereich 100 bis 150 μm, $X_{90}$ ausgewählt aus dem Bereich 165 bis 175 μm, wobei das Verhältnis der Differenz von $X_{90}$ und $X_{10}$ zu $X_{50}$-Wert im Bereich von 0.75 bis 1.5, bevorzugt 0.9 bis 1.35, ist und wobei der Pulverlack ein Strukturmittel, insbesondere Celluloseacetobutyrat (CAB) und/oder ein auf Polytetrafluorethylen (PTFE) basierendes Additiv, aufweist.

B. Pulverlack aufweisend Partikel mit einer Partikelgrössenverteilung mit $X_{10}$ ausgewählt aus dem Bereich 14 bis 16 $\mu$m, $X_{50}$ ausgewählt aus dem Bereich 77 bis 80 $\mu$m, $X_{90}$ ausgewählt aus dem Bereich 157 bis 159 $\mu$m, wobei das Verhältnis der Differenz von $X_{90}$ und $X_{10}$ zu $X_{50}$-Wert im Bereich von 1.75 bis 1.95, bevorzugt 1.8 bis 1.9, ist und wobei der Pulverlack ein Strukturmittel, insbesondere Celluloseacetobutyrat (CAB) und/oder ein auf Polytetrafluorethylen (PTFE) basierendes Additiv, aufweist.

**Patentansprüche**

1. Pulverlack aufweisend Partikel mit einer Partikelgrössenverteilung mit einem $X_{50}$-Wert im Bereich von 35 bis 175 $\mu$m, wobei das Verhältnis der Differenz des $X_{90}$-Werts und des $X_{10}$-Werts zum $X_{50}$-Wert gemäss der Formel

$$(X_{90} - X_{10}) / (X_{50})$$

   im Bereich von 0.5 bis 2.25 liegt;
   wobei der Pulverlack ein Strukturmittel aufweist,
   **dadurch gekennzeichnet, dass** der Pulverlack eine Partikelgrössenverteilung mit einem $X_{90}$-Wert im Bereich von 110 bis 195 $\mu$m aufweist, wobei die Partikelgrössenverteilung per Laser-Diffraktion in einem HELOS-System H1746 (Sympatec) bestimmt wird.

2. Pulverlack nach Anspruch 1, wobei das Strukturmittel in einer Menge im Bereich von 0.1 bis 1.5 Gew.-%, bevorzugt 0.15 bis 1.3 Gew.-%, besonders bevorzugt 0.2 bis 1.0 Gew.-%, vorliegt.

3. Pulverlack nach Anspruch 1 oder 2, wobei der Pulverlack mindestens ein Effektpigment aufweist.

4. Pulverlack nach Anspruch 3, wobei das Effektpigment ein Aluminiumpigment und/oder Perlglimmerpigment ist.

5. Pulverlack nach Anspruch 4, wobei die Gesamtzusammensetzung des Pulverlacks maximal 5 Gew.-% des Effektpigments aufweist.

6. Pulverlack nach Anspruch 4 oder 5, wobei das Aluminiumpigment Partikelgrössen im Bereich von 4 bis 100 $\mu$m aufweist.

7. Pulverlack nach einem der Ansprüche 4 bis 6, wobei das Perlglimmerpigment eine durchschnittliche Partikelgrösse im Bereich von 10 bis 60 $\mu$m aufweist.

8. Pulverlack nach einem der Ansprüche 1 bis 7 mit einer Partikelgrössenverteilung
   mit einem $X_{10}$-Wert im Bereich von 5 bis 60 $\mu$m, bevorzugt im Bereich von 12 bis 60 $\mu$m, besonders bevorzugt im Bereich von 13 bis 45 $\mu$m.

9. Pulverlack nach einem der Ansprüche 1 bis 8, wobei die maximale Partikelgrösse $\leq$ 1 mm ist.

10. Pulverlack nach einem der Ansprüche 1 bis 9, wobei der Pulverlack ein vernetzendes System ist.

11. Verfahren zur Herstellung eines Pulverlacks nach einem der Ansprüche 1 bis 10 umfassend die Schritte des

   - Zerkleinerns einer Kunststoffzusammensetzung,
   - Abtrennens von Material mit einer Partikelgrösse > 1 mm.

12. Beschichtetes, vorzugsweise elektrisch leitendes, Substrat aufweisend mindestens eine Oberfläche mit einer Pulverlackbeschichtung, insbesondere basierend auf einem Pulverlack nach einem der Ansprüche 1 bis 10, wobei die beschichtete Oberfläche

   - einen Mittelrauhwert Ra im Bereich von 10 bis 40 $\mu$m aufweist
   oder
   - eine Schiefe RSK von < 0 aufweist.

**13.** Verfahren zum Pulverlackbeschichten eines elektrisch leitenden Substrat, wobei mindestens eine Oberfläche des elektrisch leitenden Substrats mit einem Pulverlack beschichtet wird, aufweisend die Schritte des

- Bereitstellens eines zu beschichtenden elektrisch leitfähigen Substrats,
- Fluidisierens eines Pulverlacks nach einem der Ansprüche 1 bis 10,
- Auftragens des Pulverlacks, auf das elektrisch leitende Substrat,
- Aushärtens des Pulverlacks bei einer Temperatur im Bereich von 150 bis 210°C.

**Claims**

**1.** Powder coating material comprising particles having a particle size distribution with an $X_{50}$ in the range from 35 to 175 $\mu$m, where the ratio of the difference between the $X_{90}$ and the $X_{10}$ to the $X_{50}$ in accordance with the formula

$$(X_{90}-X_{10}) / (X_{50})$$

is in the range from 0.5 to 2.25; where the powder coating material comprises a structure agent, **characterized in that** the powder coating material has a particle size distribution with an $X_{90}$ in the range from 110 to 195 $\mu$m, the particle size distribution being determined by laser diffraction in a HELOS H1746 system (Sympatec).

**2.** Powder coating material according to Claim 1, where the structure agent is present in an amount in the range from 0.1 to 1.5 wt%, preferably 0.15 to 1.3 wt%, more preferably 0.2 to 1.0 wt%.

**3.** Powder coating material according to Claim 1 or 2, where the powder coating material comprises at least one effect pigment.

**4.** Powder coating material according to Claim 3, where the effect pigment is an aluminium pigment and/or pearlescent mica pigment.

**5.** Powder coating material according to Claim 4, where the overall composition of the powder coating material comprises not more than 5 wt% of the effect pigment.

**6.** Powder coating material according to Claim 4 or 5, where the aluminium pigment has particle sizes in the range from 4 to 100 $\mu$m.

**7.** Powder coating material according to any of Claims 4 to 6, where the pearlescent mica pigment has an average particle size in the range from 10 to 60 $\mu$m.

**8.** Powder coating material according to any of Claims 1 to 7, having a particle size distribution with an $X_{10}$ in the range from 5 to 60 $\mu$m, preferably in the range from 12 to 60 $\mu$m, more preferably in the range from 13 to 45 $\mu$m.

**9.** Powder coating material according to any of Claims 1 to 8, where the maximum particle size is $\leq$ 1 mm.

**10.** Powder coating material according to any of Claims 1 to 9, where the powder coating material is a crosslinking system.

**11.** Method for producing a powder coating material according to any of Claims 1 to 10 comprising the steps of

- comminuting a plastics composition,
- separating off material having a particle size > 1 mm.

**12.** Coated, preferably electrically conducting, substrate comprising at least one surface having a powder coating, more particularly based on a powder coating material according to any of Claims 1 to 10, where the coated surface

- has a mean roughness Ra in the range from 10 to 40 $\mu$m

or
- has a skewness RSK of < 0.

13. Method for powder coating an electrically conducting substrate, where at least one surface of the electrically conducting substrate is coated with a powder coating material, comprising the steps of

- providing an electrically conductive substrate to be coated,
- fluidizing a powder coating material according to any of Claims 1 to 10,
- applying the powder coating material to the electrically conducting substrate,
- curing the powder coating material at a temperature in the range from 150 to 210°C.

**Revendications**

1. Laque en poudre comprenant des particules ayant une distribution des tailles de particules ayant une valeur $X_{50}$ dans la plage allant de 35 à 175 $\mu$m, dans laquelle le rapport entre la différence de la valeur $X_{90}$ et de la valeur $X_{10}$ et la valeur $X_{50}$ selon la formule

$$(X_{90} - X_{10}) / (X_{50})$$

se situe dans la plage allant de 0,5 à 2,25 ;
dans laquelle la laque en poudre comprend un agent structurant,
**caractérisée en ce que** la laque en poudre présente une distribution des tailles de particules ayant une valeur $X_{90}$ dans la plage allant de 110 à 195 $\mu$m, la distribution des tailles de particules étant déterminée par diffraction laser dans un système HELOS H1746 (Sympatec).

2. Laque en poudre selon la revendication 1, dans laquelle l'agent structurant est présent en une quantité dans la plage allant de 0,1 à 1,5 % en poids, de préférence de 0,15 à 1,3 % en poids, de manière particulièrement préférée de 0,2 à 1,0 % en poids.

3. Laque en poudre selon la revendication 1 ou 2, dans laquelle la laque en poudre comprend au moins un pigment à effet.

4. Laque en poudre selon la revendication 3, dans laquelle le pigment à effet est un pigment d'aluminium et/ou un pigment nacré.

5. Laque en poudre selon la revendication 4, dans laquelle la composition totale de la laque en poudre comprend au plus 5 % en poids du pigment à effet.

6. Laque en poudre selon la revendication 4 ou 5, dans laquelle le pigment d'aluminium présente des tailles de particules dans la plage allant de 4 à 100 $\mu$m.

7. Laque en poudre selon l'une quelconque des revendications 4 à 6, dans laquelle le pigment nacré présente une taille de particule moyenne dans la plage allant de 10 à 60 $\mu$m.

8. Laque en poudre selon l'une quelconque des revendications 1 à 7, ayant une distribution des tailles de particules ayant une valeur $X_{10}$ dans la plage allant de 5 à 60 $\mu$m, de préférence dans la plage allant de 12 à 60 $\mu$m, de manière particulièrement préférée dans la plage allant de 13 à 45 $\mu$m.

9. Laque en poudre selon l'une quelconque des revendications 1 à 8, dans laquelle la taille de particule maximale est ≤ 1 mm.

10. Laque en poudre selon l'une quelconque des revendications 1 à 9, dans laquelle la laque en poudre est un système réticulant.

11. Procédé de fabrication d'une laque en poudre selon l'une quelconque des revendications 1 à 10, comprenant les étapes suivantes :

- le broyage d'une composition de matière plastique,
- la séparation de matériau ayant une taille de particule > 1 mm.

12. Substrat revêtu, de préférence électriquement conducteur, comprenant au moins une surface munie d'un revêtement de laque en poudre, notamment à base d'une laque en poudre selon l'une quelconque des revendications 1 à 10, la surface revêtue

- présentant une valeur de rugosité moyenne Ra dans la plage allant de 10 à 40 $\mu$m
ou
- présentant une asymétrie RSK de < 0.

13. Procédé de revêtement par une laque en poudre d'un substrat électriquement conducteur, dans lequel au moins une surface du substrat électriquement conducteur est revêtue avec une laque en poudre, comprenant les étapes suivantes :

- la mise à disposition d'un substrat électriquement conducteur à revêtir,
- la fluidisation d'une laque en poudre selon l'une quelconque des revendications 1 à 10,
- l'application de la laque en poudre, sur le substrat électriquement conducteur,
- le durcissement de la laque en poudre à une température dans la plage allant de 150 à 210 °C.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9118951 A
- WO 9836011 A
- CN 103086744 A

**In der Beschreibung aufgeführte Nicht-Patentliteratur**

- Lacke und Druckfarben. Römp Lexikon. 1998